# EUROPEAN PATENT SPECIFICATION

(11) **EP 1 320 675 B1**
(45) Date of publication and mention of the grant of the patent: **14.12.2005**
(21) Application number: 01905535.9
(22) Date of filing: 09.02.2001
(51) Int. Cl.: F02M 21/00

(54) **METHOD AND APPARATUS FOR GASEOUS FUEL INTRODUCTION AND CONTROLLING COMBUSTION IN AN INTERNAL COMBUSTION ENGINE**
VERFAHREN UND VORRICHTUNG FÜR FLÜSSIGGAS-BRENNSTOFFEINFÜHRUNG UND STEUERUNG DER VERBRENNUNG EINER BRENNKRAFTMASCHINE
PROCEDE ET APPAREIL PERMETTANT D'INTRODUIRE DU CARBURANT GAZEUX ET DE REGULER LA COMBUSTION DANS UN MOTEUR A COMBUSTION INTERNE

(30) Priority: 11.02.2000 US 503034; 17.10.2000 US 690503; 26.12.2000 US 748547
(43) Date of publication of application: 25.06.2003
(60) Divisional application: 05075553.7
(73) Proprietor: Westport Research Inc., Vancouver, British Columbia V6P 6P2 (CA); Cummins Inc., Columbus, IN 47201 (US)
(72) Inventor: ANCIMER, Richard, Vancouver, British Columbia V5L 4P9 (CA); MUNSHI, Sandeep, Vancouver, British Columbia V6P 6H2 (CA); OUELLETTE, Patric, Vancouver, British Columbia V6N 2P9 (CA); TANIN, Konstantin, Vancouver, British Columbia V6P 3E9 (CA); RUTHMANSDORFER, David, A., Columbus, IN 47203 (US)
(74) Representative: Henderson, Wendy Agnes
(86) International application number: PCT/CA2001/000160
(87) International publication number: WO 2001/059285

(56) References cited:
- DE-A- 4 419 429
- DE-A- 19 706 959
- DE-A- 19 854 776
- US-A- 5 450 829
- US-A- 5 937 800

## Description

### Field of the Invention

The present invention relates to a method and apparatus for introducing gaseous fuel into the cylinder of an internal combustion engine. More specifically, the present invention relates to a method of, and apparatus for, two-stage injection of gaseous fuel into the engine's cylinder to control the combustion mode of the gaseous fuel introduced in the two stages.

### Background of the Invention

The internal combustion engine industry is under ever increasing pressure to reduce pollution to the environment by lowering harmful engine emissions. One response to this pressure has resulted in research into adapting compression ignition (Cl) engines (also known as "diesel" engines) to burn natural gas instead of diesel fuel. Compared to diesel fuel, natural gas is a relatively clean burning fuel and the substitution of natural gas for diesel fuel can reduce emission levels of both nitrogen oxides (NOx) and particulate matter (PM). A known technique for substituting natural gas for diesel fuel is called dual fuel operation. In this method, natural gas is mixed with intake air prior to introducing the air/natural gas mixture into the engine cylinder (a process known in the art as fumigation). The mixture is then introduced into the piston cylinder during the intake stroke. During the compression stroke, the pressure and temperature of the mixture are increased. Near the end of the compression stroke, dual fuel engines inject a small quantity of pilot diesel fuel to ignite the mixture of air and natural gas. Combustion is triggered by the auto-ignition of the diesel fuel and it is believed that a propagation combustion mode occurs under these conditions. One advantage of employing a pre-mixed charge of air and natural gas is that the fuel to air ratio can be lean. With fumigation it is possible to realize the advantages of "lean burn" operation, which include lower NOx emissions, lower PM and a potentially higher cycle efficiency.

Documents DE 19,854,776 and US 5,450,829 both describe engines wherein a pilot fuel is directly injected into the combustion cylinder in order to optimise the ignition of a first homogeneous fuel.

Known dual fuel methods, however, have at least two disadvantages. One disadvantage is encountered at high load engine operating conditions, when the elevated temperature and pressure in the piston cylinder during the compression stroke makes the air/natural gas mixture susceptible to "knocking". Knocking is the uncontrolled auto-ignition of a premixed fuel/air charge. Knocking leads to a rapid rate of fuel energy release that can damage engines. Measures to reduce the risk of knocking including lowering the compression ratio of the piston stroke or limiting the power and torque output. These measures, however, cause a corresponding reduction in the engine's cycle efficiency (that is, not as much power is available from each piston stroke).

A second disadvantage of known dual fuel methods is that under low load engine operating conditions, the mixture of fuel and air becomes too lean to support stable premixed combustion and results in incomplete combustion or misfiring. The intake air flow can be throttled to maintain a mixture that can sustain premixed combustion, but throttling adversely affects engine efficiency.

### Summary of the Invention

A method of introducing gaseous fuel into a cylinder of an operating internal combustion engine, which has a piston disposed within the cylinder, the method comprising:
(a) monitoring a set of engine parameters;
(b) determining engine load and engine speed from the set of engine parameters;
(c) in a first stage, introducing a first gaseous fuel into the cylinder where the first gaseous fuel forms a substantially homogeneous mixture comprising the first gaseous fuel and intake air prior to combustion; and
(d) in a second stage, occurring sequentially after the first stage, introducing a second gaseous fuel into the cylinder;
wherein the first and second gaseous fuel quantity is controllable in response to at least one of engine load and engine speed, and at least one of initiation and duration of at least one of the first and second stages is variable in response to at least one of engine load and engine speed. The second stage is preferably initiated when the piston is at or near top dead center.

In a preferred method, within the same engine cycle, the first gaseous fuel combusts according to a pre-mixed combustion mode, and the second gaseous fuel combusts substantially according to a diffusion combustion mode. For improved efficiency and reduced emissions the pre-mixed combustion mode is preferably a homogeneous charge compression ignition mode.

The engine may be a two-stroke engine but is preferably a four-stroke engine to reduce scavenging losses of the air/fuel mixture.

The first stage is initiated so that the first gaseous fuel has time to mix with the intake air to form a homogeneous charge. For example, when the first stage begins during the intake stroke, the first gaseous fuel may be introduced directly into the engine cylinder or into the intake port so that it enters the cylinder with the intake air. When the first gaseous fuel is introduced during the intake stroke, it is preferable for the first stage to begin early in this stroke, for example, at the very beginning of the intake stroke when the piston is at or near top dead centre, to give the first gaseous fuel more time to mix with the intake air. In another preferred method the first gaseous fuel is pre-mixed with intake air prior to being introduced into the cylinder. For example, the first gaseous fuel may be pre-mixed with intake air upstream from a turbocharger or a supercharger.

The set of engine parameters preferably comprises at least one of engine speed, engine throttle position, intake manifold temperature, intake manifold pressure, exhaust gas recirculation flow rate and temperature, air flow into the cylinder, compression ratio, intake and exhaust valve timing and the presence or absence of knocking within the cylinder. Engine speed can be measured directly and is a parameter that is used, for example, to control first and second stage timing. Generally timing is advanced as engine speed increases. Engine throttle position is an indication of engine load, which may be used to control the quantity of the first and second gaseous fuel. Other parameters may be monitored as indicators of the in-cylinder conditions that are preferably controlled to be conducive to combusting the first stage fuel in a HCCI combustion mode.

The timing and fuel quantity of the second stage can be manipulated to influence the in-cylinder conditions in subsequent engine cycles. For example, at least one of second stage gaseous fuel quantity, second stage initiation and/or second stage duration can be varied in response to changes in the value of at least one parameter of the set of engine parameters, to maintain in-cylinder conditions that are conducive to HCCI combustion of the first gaseous fuel. Control of the second stage initiation and/or duration and/or fuel quantity is preferably employed as an additional means for controlling in-cylinder conditions, which may be used in conjunction with more conventional control means such as controlling EGR flow rate or intake air/fuel equivalence ratio. An electronic control unit preferably controls the initiation, duration and quantity of the second gaseous fuel, with reference to a look-up table to determine a plurality of control settings for a given engine load and speed condition.

The second gaseous fuel is preferably employed to supplement the first gaseous fuel when the quantity of first gaseous fuel is knock-limited. This allows the engine to operate at higher load conditions. Accordingly, the quantity of the second gaseous fuel is variable and the quantity increases when the engine load increases.

For turbocharged engines the intake manifold pressure is influenced by exhaust gas pressure and temperature since the exhaust gas drives the turbocharger. Therefore, intake manifold pressure can be controlled, at least in part, by controlling at least one of (a) the quantity of the second gaseous fuel and (b) the time the second gaseous fuel is introduced into the cylinder, since these variables are controllable to change exhaust gas pressure and temperature. For example, when knocking is detected, if intake manifold pressure is increased without increasing first gaseous fuel flow rate, the first stage charge will be leaner and less likely to result in knocking. Accordingly, the initiation, duration and fuel quantity of the second stage can be manipulated to increase intake manifold pressure to reduce intake charge equivalence ratio in subsequent engine cycles when knocking is detected.

For engines that are turbocharged and/or that use exhaust gas recirculation, the exhaust gas temperature has an effect on intake manifold temperature. Accordingly, intake manifold temperature can be influenced in subsequent engine cycles by controlling at least one of:
(a) the quantity of the second gaseous fuel; and
(b) the time the second gaseous fuel is introduced into the cylinder.
Intake manifold temperature has a significant effect on knocking and HCCI combustion. For example, when knocking is detected, a countermeasure to knocking is reducing intake manifold temperature. The second stage initiation, duration and fuel quantity may be used to control intake manifold temperature in conjunction with conventional temperature means, such as, for example, intercoolers and aftercoolers.

In a preferred method the second stage comprises a plurality of fuel injection pulses. A plurality of injection pulses or a shaped injection pulse adds more flexibility. For example, the initiation and/or duration and/or fuel quantity for one pulse can be controlled in response to engine load, and the initiation and/or duration and/or quantity of another pulse can be controlled to influence intake manifold temperature and/or pressure in subsequent engine cycles. That is, the portion of second gaseous fuel that is introduced in a first injection pulse can be increased in response to an increase in engine load. Further, the initiation and/or duration and/or fuel quantity in a second injection pulse is controllable to influence at least one of intake manifold temperature and intake manifold pressure, whereby second injection pulse timing is advanced to reduce intake manifold temperature and/or pressure, and/or fuel quantity is reduced to reduce intake manifold temperature and/or pressure. Intake manifold temperature is preferably reduced when knocking is detected.

The initiation and/or duration and/or fuel quantity for different injection pulses may be independently controlled and at least one of the first and second injection pulses is controlled in response to at least one of engine load and speed. Preferably, the total amount of fuel introduced in the second stage may be determined by the engine load, but the electronic control unit (ECU) may refer to a look-up table to apportion this total amount of fuel between a plurality of injection pulses, with the ECU accounting for the fuel conversion efficiency that corresponds to the timing of the injection pulses.

The method may further comprise introducing a pilot fuel into the cylinder so that it ignites when the piston is at or near top dead centre of the compression stroke. To reduce NOx emissions the pilot fuel injection timing and pilot fuel quantity is controlled to form a substantially lean stratified charge prior to the ignition of the pilot fuel. To form a substantially lean stratified charge, the pilot fuel is preferably introduced into the cylinder when the piston is between 120 and 20 crank angle degrees before top dead center. The timing and amount of gaseous fuel and pilot fuel introduced into the cylinder is preferably electronically controlled.

In addition to other measures that may be taken when knocking is detected, pilot fuel quantity and timing may also be varied when knocking is detected. Whether pilot fuel timing is advanced or delayed in response to detected knocking depends upon several variables, but the ECU preferably determines the appropriate action by referring to a look-up table. Some of these variables include, for example, the current pilot fuel injection initiation, fuel injection duration, engine speed, and current intake manifold temperature and pressure.

Preferred pilot fuels include diesel fuel and dimethylether. The first and second gaseous fuels may be different fuels but they are preferably the same gaseous fuel. However, the gaseous fuel for one of the stages may be pre-mixed with the pilot fuel so that the pilot fuel and gaseous fuel are introduced together. The first gaseous fuel and the second gaseous fuel are preferably selected from the group consisting of natural gas, liquefied petroleum gas, bio-gas, landfill gas, and hydrogen gas.

Instead of employing a pilot fuel, the engine may be equipped with a spark plug or glow plug to initiate combustion of the gaseous fuel.

In a preferred method of introducing fuel into a cylinder of an operating internal combustion engine having a piston disposed within the cylinder, the fuel comprises a main fuel and a pilot fuel that is auto-ignitable to a degree greater than the main fuel. The method comprises introducing fuel into the cylinder in three stages, whereby,
(a) a first portion of the main fuel is introduced in a first main fuel stage, timed such that the first portion has sufficient time to mix with intake air so that the first portion burns in a pre-mixed combustion mode;
(b) the pilot fuel is introduced in a pilot stage, such that the pilot fuel auto-ignites when the piston is at or near top dead center; and
(c) a second portion of the main fuel is introduced in a second main fuel stage, such that the second portion bums in a diffusion combustion mode;
wherein the quantity of the first portion of main fuel is controlled to provide a main fuel to air ratio during a compression stroke that is less than a calibrated knocking limit.

In this preferred method the second portion may be introduced in a plurality of injection pulses, with the first of the plurality of injection pulses being timed to ignite with the pilot fuel to assist with the ignition of the first portion of the main fuel. That is, part of the second portion of the main fuel may be ignited to assist with the combustion of the first portion of the main fuel.

The first portion of the main fuel is preferably introduced through an auxiliary injection valve into an air induction passage upstream from the cylinder.

The pilot stage preferably begins during a compression stroke. More specifically, the pilot stage preferably begins when the piston is between 120 and 20 crank angle degrees before top dead center so that the pilot fuel has time to form a substantially lean stratified charge prior to combustion.

The second main fuel stage preferably begins when the piston is at or near top dead centre of a compression stroke.

An apparatus is provided for introducing fuel into the cylinder of an operating internal combustion engine having at least one cylinder with a piston disposed therein. The fuel comprises a main fuel and a pilot fuel that is auto-ignitable to a degree greater than the main fuel. The apparatus comprises:
(a) measuring devices for collecting operational data from the engine, the measuring devices comprising a tachometer for measuring engine speed and a sensor for determining throttle position;
(b) an electronic control unit that receives the operational data and processes the data to compute a set of load conditions, the electronic control unit comprising memory for storing control sets of load conditions and predetermined operating modes for the control sets of load conditions, the electronic control unit matching the computed set of load conditions with the control sets of load conditions to select one of a plurality of predetermined operating modes;
(c) a main fuel injection valve controlled by the electronic control unit to introduce the main fuel into the cylinder at times and in quantities determined by the electronic control unit in accordance with the predetermined operating modes and the set of load conditions; and
(d) a pilot fuel injection valve controlled by the electronic control unit to introduce the pilot fuel into the cylinder at times and in quantities determined by the electronic control unit with the predetermined operating modes and the set of load conditions;
wherein the predetermined operating mode comprises a three stage introduction of fuel into the cylinder, whereby a first portion of the main fuel is introduced in a first stage, the pilot fuel is introduced in a second stage and a second portion of the main fuel is introduced in a third stage.

The main fuel injection valve and the pilot fuel injection valve are preferably integrated into a dual fuel injection valve that is operable to inject each one of the main fuel and the pilot fuel independently from the other. An advantage of a dual fuel injection valve is that fewer modifications are required to conventional diesel engines that only have a single fuel injector.

The apparatus may further comprise an auxiliary injection valve associated with an air induction system for introducing the main fuel into an air induction passage. By using an auxiliary injection valve the main fuel may mix with intake air prior to being introduced to the cylinder. The air induction passage may be, for example, an air induction manifold, and is preferably upstream from a turbocharger or supercharger. When the auxiliary injection valve is located in the engine intake port, and the engine comprises a plurality of cylinders, an auxiliary injection valve is provided for each one of the cylinders.

Further advantages for the present dual fuel injection technique will become apparent when considering the drawings in conjunction with the detailed description.

### Brief Description of the Drawings

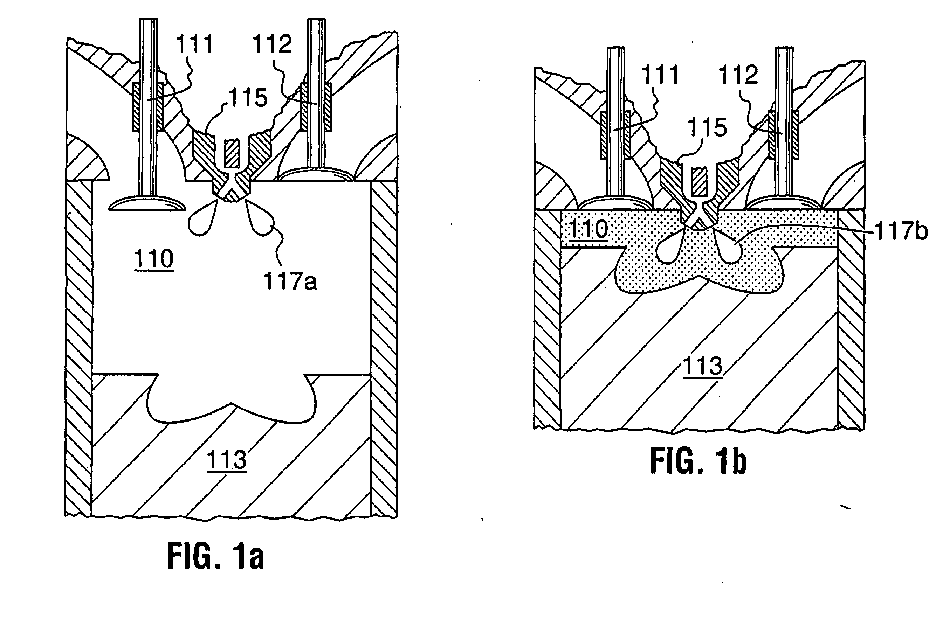

Figure 1, which comprises Figures 1a and 1b, depicts partial cross-sectional views of an engine cylinder, showing the sequential injection of fuel into the cylinder without pilot fuel. Figure 1a depicts a portion of the main fuel being injected into the cylinder during the intake stroke, and Figure 1b depicts the remainder of the main fuel being injected near the beginning of the power stroke.

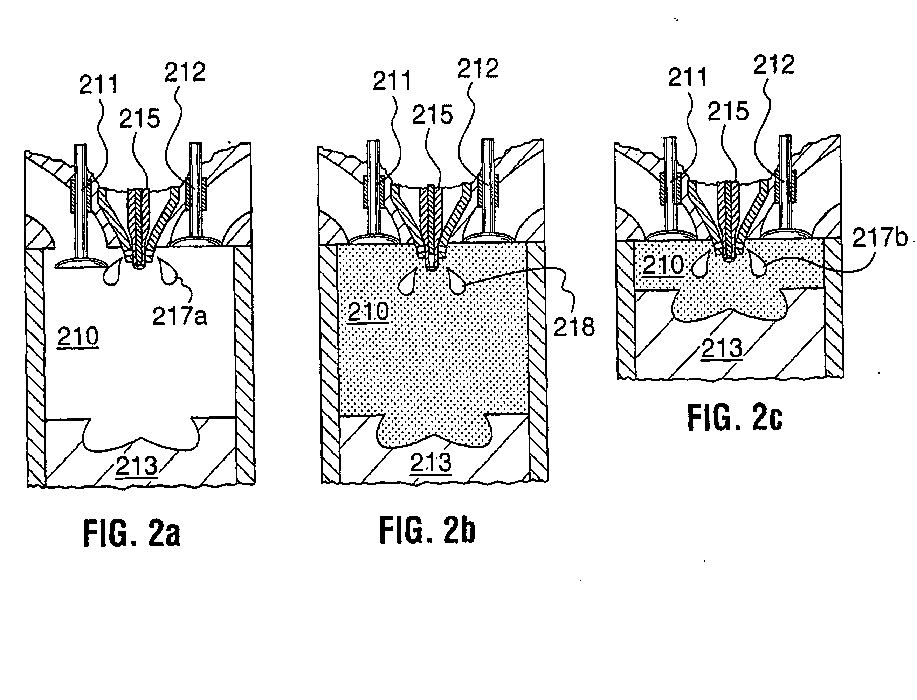

Figure 2, which comprises Figures 2a, 2b and 2c, depicts partial cross section views of an engine cylinder, showing the sequential injection of fuel into the cylinder with pilot fuel. Figure 2a depicts a portion of the main fuel being injected into the cylinder during the intake stroke, Figure 2b depicts the injection of a pilot fuel during the compression stroke and Figure 2c depicts the remainder of the main fuel being injected near top dead centre of the compression stroke.

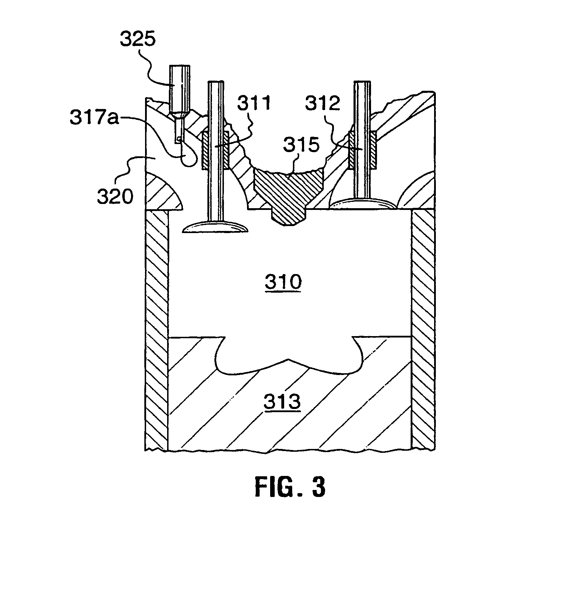

Figure 3 is a partial cross section view of a cylinder that depicts an alternative arrangement for mixing the main fuel with the intake air. In this arrangement, instead of mixing the main fuel and intake air in the cylinder, they are premixed external to the cylinder (that is, prior to being introduced into the cylinder).

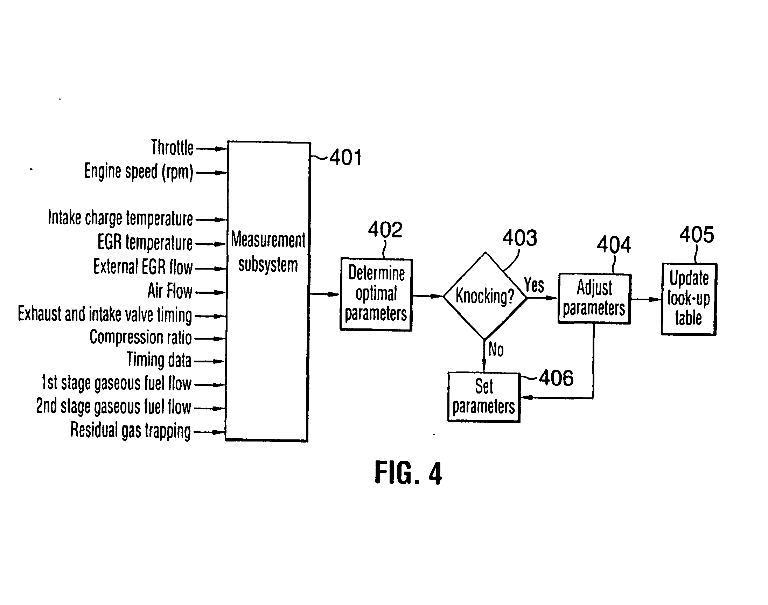

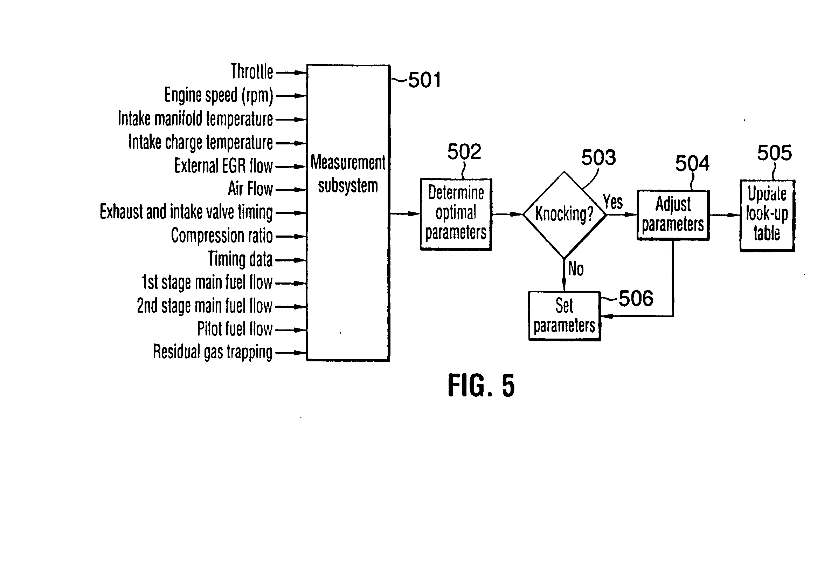

Figures 4 and 5 are control logic diagrams that provide an example of the logic that might be employed by an electronic control unit to implement the disclosed method.

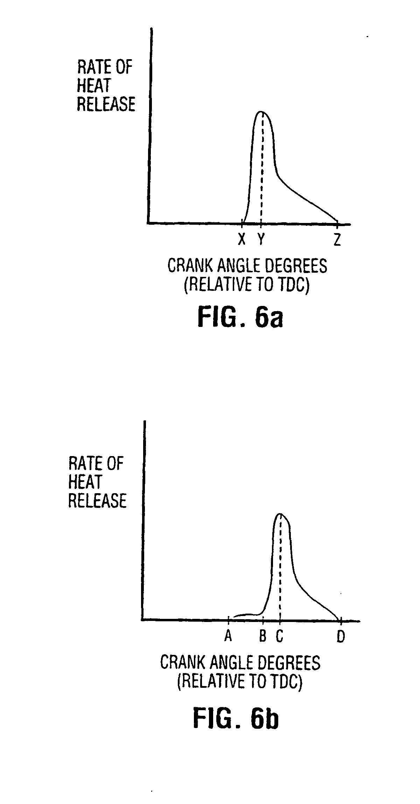

Figure 6, which comprises Figures 6a and 6b, depicts the rate of heat release curves associated with the HCCI mode and diffusion mode combustion processes. Figure 6a depicts the rate of heat release curve for lean burn (HCCI mode) and diffusion mode combustion without pilot fuel. Figure 6b depicts the rate of heat release curve for pilot plume, lean burn (HCCI or flame propagation mode) and diffusion mode combustion with pilot fuel.

### Detailed Description of Preferred Embodiment(s)

In a preferred method, fuel is injected into the cylinder of a four-stroke internal combustion engine having at least one reciprocating piston and a crankshaft associated with the piston. In this disclosure, the position of the piston within the cylinder is described with reference to crank angle degrees before or after top dead center (TDC). The piston is at TDC when the piston has reached the end of an upward stroke and is about to begin a downward stroke (that is, the point when the piston is closest to the cylinder head).

The method involves a main fuel, which is preferably a gaseous fuel such as, for example, natural gas, propane, bio-gas, landfill gas or hydrogen gas. The method may further comprise the use of an ignition source to control the combustion timing of the main fuel. The ignition source may be, for example, a pilot fuel that auto-ignites more readily than the main fuel, a hot surface ignition source, such as a glow plug, a spark plug, or other known ignition device. When a pilot fuel is employed, preferred fuels are conventional diesel or dimethylether.

Figure 1 illustrates a preferred method of introducing fuel into cylinder 110 in two separate stages. In the embodiment of Figure 1, the fuel auto-ignites in cylinder 110 with the fuel introduced during the first stage burning substantially in a pre-mixed lean burn combustion mode and the fuel introduced during the second stage burning substantially in a diffusion combustion mode.

In the first stage, depicted in Figure 1a, piston 113 is moving away from injection valve 115 during the intake stroke. Intake air is drawn into cylinder 110 through open intake valve 111. Exhaust valve 112 is closed. In the first stage, main fuel 117a is also introduced into cylinder 110 where it mixes with the intake air. In alternative embodiments (not shown), first stage main fuel introduction may be timed to occur when piston 113 is at bottom dead centre or during the compression stroke, when piston 113 is moving towards injection valve 115 and intake valve 11 is closed. However, delaying first stage main fuel introduction reduces the opportunity for main fuel 117a to mix with the intake air. Accordingly, if the first stage is timed to occur during the compression stroke, it is preferable for it to occur during the early part of the compression stroke, when piston 113 is near bottom dead centre.

The quantity of main fuel introduced during the first stage is limited to reduce the likelihood of knocking. Because the quantity of main fuel introduced during the first stage is limited to very lean conditions (that is, equivalence ratios between 0.10 and 0.50), combustion is expected to occur rapidly via a HCCI combustion mode. Ignition of the pre-mixed charge near top dead centre of the compression stroke results in high thermal efficiencies. Control over the start and rate of pre-mixed combustion is achieved by controlling at least one of intake manifold temperature, intake manifold pressure, EGR rate, EGR temperature, residual gas trapping fraction and compression ratio. In a preferred method, most or all of these parameters are controlled to control the timing of the auto-ignition of the pre-mixed charge via a HCCI combustion mode. Since the pre-mixed fuel and air burns under very lean conditions, the NOx formation rates are very small.

Since the quantity of main fuel introduced in the first stage is limited to prevent knocking, an additional quantity of main fuel is introduced during the second stage to satisfy the engine load requirements. Preferably, the second stage injection of main fuel occurs near top dead centre, as shown in Figure 1b. In Figure 1b, piston 113 is moving away from injection valve 115, propelled by the combustion of fuel within cylinder 110. Intake valve 111 and exhaust valve 112 are both closed during the sequential compression and power strokes. Preferably, the second stage occurs late in the compression stroke or during the early part of the power stroke, since introduction of additional fuel late in the power stroke contributes less to engine power output than if it is added earlier. The second stage main fuel introduction is preferably completed before the crankshaft connected to piston 113 has rotated more than 50 degrees beyond the point when piston 113 was at TDC at the beginning of the power stroke.

Because second stage main fuel 117b is introduced near the end of the compression stroke or during the early part of the power stroke, it does not have an opportunity to thoroughly mix with the air in cylinder 110 prior to ignition. Consequently, second stage main fuel 117b bums substantially in a diffusion combustion mode. Since the quantity of first stage main fuel 117a is limited by the engine's knock limit, engine power output is controlled under high load conditions by adjusting the quantity of main fuel 117b introduced during the second stage.

In an engine employing EGR and/or turbocharging, the quantity and/or timing of introducing second stage main fuel 117b is controllable to influence intake manifold temperature and intake manifold pressure in subsequent engine cycles. In a preferred method, the quantity of second stage main fuel 117b is determined primarily by engine load, since the second stage fuel quantity compensates for the fuel shortfall from the first stage imposed by the knock limit. However, the timing of the second stage can be manipulated to contribute to controlling intake manifold temperature and intake manifold pressure. For example, by retarding the introduction of main fuel 117b or increasing the amount of second stage main fuel, the exhaust gas temperature and pressure generally increases. Higher exhaust gas temperature and pressure can be used to increase turbocharger output to increase intake manifold pressure. An intercooler may be employed to add further control to the intake manifold temperature. Exhaust gas temperature may also directly influence intake manifold temperature if the engine uses EGR. In a preferred method, an electronic control unit is used to control the fuel quantity and timing for the second stage main fuel introduction. The electronic control unit receives information on engine load and engine speed (or engine parameters from which the electronic control unit can calculate engine load and speed). The electronic control unit uses this information to determine fuel quantity and timing by referring to a look-up table which contains calibrated values for fuel quantity and timing for given engine operating conditions based upon engine load and speed.

When knocking is detected, one option for preventing further knocking is reducing the amount of main fuel introduced in the first stage and increasing the amount of fuel introduced in the second stage. However, another option for preventing knocking is controlling the timing of the second stage. For example, second stage timing can be retarded to increase intake manifold pressure by boosting the turbocharger output. The higher temperature exhaust gas can be offset by employing an intercooler and/or an aftercooler. Increasing intake manifold pressure in this way results in more air being inducted into the cylinder, thereby forming a leaner homogeneous charge which prevents knocking. Alternatively, second stage timing can be advanced to cool exhaust gas temperature and thus cool intake manifold temperature. An intercooler and/or aftercooler may also be used in combination with advancing the timing of the second stage. Whether the second stage timing is advanced or retarded may depend upon the present timing of the second stage when knocking is detected. This technique of manipulating second stage timing may also be used in combination with reapportioning the fuel quantities that are introduced in the first and second stages.

The electronic control unit may also re-calibrate the look-up table to prevent a recurrence of knocking under the same operating conditions.

In one embodiment main fuel 117b is introduced in a plurality of injection pulses. For example, fuel introduced in a first injection pulse may be employed to satisfy load requirements and fuel introduced in a second injection pulse may be employed to control exhaust gas temperature and pressure which can in turn contribute to controlling intake manifold temperature and/or intake manifold pressure in subsequent engine cycles.

Figure 2 illustrates another preferred method of introducing a main fuel into cylinder 210 in two separate stages, which further comprises the introduction of a pilot fuel to initiate combustion of the main fuel. Similar to the embodiment of Figure 1, in the embodiment of Figure 2, the main fuel introduced during the first stage mixes with the intake air and burns substantially in a homogeneous lean burn combustion mode, and the main fuel introduced during the second stage bums substantially in a diffusion combustion mode.

Figure 2a shows the introduction of first stage main fuel 217a into cylinder 210 through injection valve 215 during the intake stroke when intake valve 211 is open and exhaust valve 212 is closed. In Figure 2a piston 213 is at bottom dead center or moving away from injection valve 215. The method of introducing first stage main fuel 217a is similar to the method of introducing first stage main fuel 117a of the previously described embodiment and all of the alternative methods of introducing the first stage main fuel are also applicable to this embodiment.

Figure 2b depicts the introduction of pilot fuel 218 when piston 213 is moving towards injection valve 215 during the compression stroke. Intake valve 211 and exhaust valve 212 are both closed. The amount of pilot fuel 218 and the pilot fuel injection timing are set such that a pre-mixed stratified charge of pilot fuel, main fuel, and air is formed within cylinder 210. In a preferred method the stratified charge is overall lean with respect to the amount of pilot fuel and main fuel within the pilot plume. Preferably, ignition of the stratified charge is coordinated with about the time piston 213 reaches top dead centre of the compression stroke. When the pilot fuel plume ignites, pilot fuel 218 and main fuel trapped within the pilot plume both combust. Since the pilot plume is overall lean, the benefits of lean burn combustion on NOx formation rates are realized in the pilot plume.

In another embodiment, the pilot fuel may be injected into cylinder 210 when piston 213 is near TDC. In this embodiment, the pilot fuel burns substantially in a diffusion combustion mode, which results in higher NOx formation rates. Accordingly, it is preferred to inject the pilot fuel early in the compression stroke as illustrated in Figure 2b so that a stratified pilot plume forms within cylinder 210. However, pilot fuel 218 must not be injected too early, because this would result in an over-lean stratified charge that does not auto-ignite in a repeatable way from one cycle to the next. The pilot fuel is preferably introduced into cylinder 210 between 120 and 20 crank angle degrees before TDC. The optimal pilot fuel injection timing may vary with engine speed and load condition. Pilot fuel quantity and timing may also be adjusted if knocking is detected.

As shown in Figure 2c, the second stage injection of main fuel 217b occurs when piston 213 is near top dead centre, similar to the previous embodiment shown in Figure 1b. Because main fuel 217b is introduced at the end of the compression stroke or early in the power stroke, it does not have an opportunity to thoroughly mix with the air in cylinder 210. Accordingly, second stage main fuel 217b bums substantially in a diffusion mode of combustion. Since most of the fuel in the pilot plume and a portion of the pre-mixed charge are burned by the time of the second stage main fuel introduction, injected main fuel 217b mixes with air and significant amounts of combustion products. The NOx formation rates are potentially reduced because of lower oxygen potential.

Since the quantity of first stage fuel 217a is limited by the engine's knock limit, engine power output is controlled under high load conditions by adjusting the quantity of second stage main fuel 217b.

As with the embodiment of Figure 1, the second stage timing and quantity of second stage fuel 217b can be controlled to influence intake manifold temperature and intake manifold pressure in subsequent engine cycles. Second stage fuel 217b may be injected in a plurality of injection pulses. When a pilot fuel is employed, a portion of second stage fuel 217b may be injected into cylinder 210 so that it combusts with pilot fuel 218 to assist with igniting the homogeneous charge. Similar to the method illustrated in Figure 1, second stage timing and quantity can be manipulated to influence intake manifold temperature and pressure to prevent knocking or contribute to conditions conducive to HCCI combustion.

Pilot fuel flow rate and injection timing are used in addition to the control parameters discussed in the first embodiment to optimize engine operation in the sense of maintaining high cycle efficiency while keeping NOx and PM levels as low as possible while at the same time preventing the occurrence of knocking. That is, the use of a pilot fuel gives additional control over the start of pre-mixed charge combustion. The control is achieved through compression heating of the pre-mixed charge outside the pilot plume by the expansion of the burned charge in the pilot plume (density ratio of burned to unburned charge is approximately 4). This expansion compresses the unburned premixed charge outside the pilot plume. The compression causes the temperature of the unburned pre-mixed charge to increase, leading to auto-ignition (similar to compression effects leading to end gas ignition in spark ignition engines).

The amount of pilot fuel and premixed fuel/air equivalence ratio together determine the amount of temperature increase. Early injected pilot fuel forms a substantially lean stratified plume within a cylinder filled with pre-mixed fuel and air. The development of the pilot fuel plume is dependent upon pilot fuel injection timing and pilot fuel quantity as well as in-cylinder conditions. Preferably the compression and temperature rise caused by the pilot plume combustion causes the pre-mixed fuel and air to burn in a HCCI combustion mode. Alternatively, it is possible that the temperature increase caused by pilot plume combustion will in turn cause a flame to propagate through the lean pre-mixed charge (however, flame propagation through the pre-mixed charge is not expected since the equivalence ratio of the pre-mixed charge is expected to be too low to sustain flame propagation). In either case, control over the on-set of the pre-mixed charge combustion can be controlled by combusting a stratified pilot fuel plume. The benefits of lean burn combustion in reducing NOx formation rates are realized in either case.

There is the penalty of higher NOx formation in the pilot plume relative to very lean fumigated combustion because the stratified pilot plume is richer (when both main fuel and pilot fuel are considered). When the main fuel is a gaseous fuel such as natural gas or hydrogen, and the pilot fuel is diesel fuel, introducing the second stage of main fuel increases the proportion of main fuel that may be employed to satisfy engine requirements under high load conditions. Increasing the proportion of main fuel reduces the quantity of diesel fuel consumed, thereby reducing NOx emissions. In a preferred embodiment, the quantity of pilot fuel 218 generally represents on average less than about 10% of the total quantity of fuel on an energy basis, with main fuel 217a and 217b providing the balance. At specific operating conditions the quantity of pilot fuel 218 may be higher or lower than 10% of the total fuel quantity.

Figure 3 depicts an alternative arrangement for introducing first stage main fuel 317a into cylinder 310 during the intake stroke. In Figure 3, intake valve 311 is open and exhaust valve 312 is closed. Piston 313 is moving away from injection valve 315 and drawing a mixture of intake air and first stage main fuel into cylinder 310. Rather than starting to mix gaseous main fuel 317a and air 320 within cylinder 314, auxiliary injection valve 325 introduces main fuel 317a into the air induction system so that main fuel 317a begins mixing with air in induction passage 320 before being drawn into cylinder 310. Induction passage 320 may be, for example, an air intake manifold, or an air intake passage further upstream in the air intake system. Persons skilled in the art will appreciate that auxiliary injection valve 325 may be located, for example, upstream from a turbocharger so that air pressure is lower at the point of injection and the air and fuel have more time to mix together before being introduced into cylinder 310.

Pre-mixing of fuel and air prior to introduction into cylinder 310 gives the mixture more time to become homogeneous before combustion. Intake valve 311 controls the introduction of the pre-mixed charge of fuel and air. In engines that employ only one fuel, the second stage fuel is introduced through injection valve 315, as shown in Figure 1b. In engines that employ a pilot fuel, injection valve 315 is preferably a dual fuel injection valve that operates like injection valve 215, shown in Figures 2b and 2c to introduce pilot fuel and the second stage main fuel.

For engines that comprise a plurality of pistons, a plurality of auxiliary injection valves may be employed, or auxiliary injection valve 325 may be located further upstream in the air induction system to serve all of the pistons.

Figure 4 illustrates a control logic diagram that that shows how a measurement subsystem 401 may be used to collect data relating to current operating conditions. In a preferred embodiment, measurement subsystem 401 collects data relating to the throttle position, the engine speed, and other operating parameters, and sends this data to an electronic control unit (ECU). The ECU need not be a separate stand-alone component or unit, but may be integrated with other components such as, for example, engine operational data measuring devices. Measurement subsystem 401 may optionally provide additional data, such as intake manifold temperature; intake manifold pressure; intake air flow; external EGR flow rate; external EGR temperature; exhaust and intake valve timing; compression ratio and information that indicates the occurrence of knocking.

The ECU preferably receives data from measurement subsystem 401 and registers or uses the data to calculate:
(a) the current engine speed;
(b) the current air flow (A);
(c) the current external EGR flow rate and temperature (T_{EGR});
(d) the current intake manifold charge temperature (IMT);
(e) the current residual gas fraction trapping (which may be calculated from exhaust and intake valve timing);
(f) the current compression ratio (CR); and
(g) the current intake manifold pressure (IMP).

At step 402 the ECU determines the desired control parameters by referring, for example, to a look-up table that stores the required information. For example, for a given speed and load condition, the look-up table contains information regarding the optimal intake manifold temperature, intake manifold pressure, compression ratio, residual gas fraction trapping, intake and exhaust valve timing, EGR flow rate, EGR temperature, the amount of main fuel to inject early, and the timing and amount of main fuel to inject in the second stage. Appropriate measures are taken to reach the optimal values. For example, if the EGR flow rate is too low, then the EGR flow rate is increased.

In the present method, the optimal values of intake manifold temperature, intake manifold pressure, compression ratio, residual gas trapping, intake and exhaust valve timing, EGR flow rate, EGR temperature, and the amount of main fuel injected in the first and second stages are chosen such that engine operation is optimised in the sense of maintaining high cycle efficiency while keeping NOx and PM levels as low possible while at the same time preventing the occurrence of knocking. An example of a rate of heat release curve corresponding to this optimal condition is depicted in Figure 6a. In this figure, rate of heat release is plotted against crank angle degrees relative to TDC. The main fuel ignites near the beginning of the power stroke, at crank angle degree X, which is at or near TDC. The pre-mixed charge burns rapidly, typically within the first 10-20 crank degrees after top dead centre and peaking at crank angle degree Y. Very little NOx is produced during the combustion of the lean pre-mixed charge. As discussed above, the timing of the on-set of premixed charge combustion is controlled by at least one of intake manifold temperature, amount of main fuel injected early, intake manifold pressure, external EGR rate, residual gas trapping and timing and amount of main fuel injected in the two stages. The fuel/air ratio of the premixed charge is knock and pressure limited (that is, if the fuel/air ratio is too rich, knocking can occur, or maximum in-cylinder pressure limits can be exceeded). The second stage of main fuel injection is timed to occur near TDC of the compression stroke. A portion of the main fuel introduced during the second stage also burns near top dead centre, contributing to the heat released to form the peak at crank angle degree Y. The fuel injected during the second stage bums substantially under diffusion mode combustion. To maintain high cycle efficiency, the injection of the main fuel during the second stage is substantially complete at crank angle degree Z, which is between about 30 to 50 crank degrees after TDC of the compression stroke.

The ECU may also receive data from measurement subsystem 401 that indicates whether or not knocking occurs. If at step 403 the ECU detects knocking, then appropriate control measures are taken at step 404 to adjust parameters to prevent further knocking. For example, the amount of main fuel injected early is reduced, with a corresponding increase in the amount of main fuel injected in the second stage near top dead centre. In addition, or in an alternative measure, based upon predetermined corrective actions set out in a look-up table, the ECU may, for example, elect to do one or more of the following:
(a) reduce the compression ratio;
(b) delay closing the intake valve closing; and
(c) reduce the external EGR rate.

To prevent further occurrences of knocking, at step 405 the ECU may recalibrate its stored values in its memory to recalibrate the value for knock limit.

At step 406 the ECU finally sets the engine operating parameters after taking into account the look up table values determined in step 402 and any adjustments made in step 404. These parameters preferably include one of more of the following:
(a) first stage gaseous fuel flow;
(b) first stage gaseous fuel timing;
(c) intake manifold temperature;
(d) intake manifold pressure;
(e) intake valve timing;
(f) exhaust valve timing;
(g) external EGR flow rate and/or residual gas trapping;
(h) compression ratio;
(i) second stage gaseous fuel quantity; and
(j) second stage gaseous fuel timing.

Figure 5 is a control logic diagram that is similar to the diagram of Figure 4, except that Figure 5 is directed to an engine that employs a pilot fuel to initiate combustion of a gaseous main fuel. Accordingly, some of the parameters measured by measurement subsystem 501 are different from the parameters measured by subsystem 401 of Figure 4. For example, subsystem 501 measures pilot fuel flow but need not measure intake manifold temperature or EGR temperature, since these parameters need not be monitored to control auto-ignition of the gaseous fuel. Steps 502 through 506 are substantially the same as corresponding steps 402 through 406 of Figure 4, described above.

The disclosed method of introducing main fuel in two separate stages reduces the likelihood of knocking, provides efficient operation by using both lean burn (HCCI) and diffusion modes of combustion, and maintains high engine output while reducing NOx emissions compared to conventional methods of operation.

An example of a rate of heat release curve corresponding to the method of Figure 5 is depicted in Figure 6b. In this figure, the rate of heat release is plotted against crank angle degrees relative to TDC. The pilot plume combustion begins at crank angle degree A, which is near TDC (preferably within the range of between 20 degrees before or after TDC). The pilot plume continues to burn until crank angle degree B at which point the pre-mixed charge begins to burn rapidly. Substantially all of the pre-mixed charge bums within the first 10-20 crank angle degrees after top dead centre, as shown by the relatively high rate of heat release which peaks after TDC at crank angle degree C. Very little NOx is produced during the combustion of the lean pre-mixed charge. As discussed above, the timing of the on-set of pre-mixed charge combustion is controlled by at least one, and possibly several of the following parameters: intake manifold temperature, amount of main fuel injected early, intake manifold pressure, external EGR rate, residual gas trapping and timing and amount of main and pilot fuels injected in the three stages. The fuel/air ratio of the pre-mixed charge is knock and pressure limited (that is, if the fuel/air ratio is too rich, knocking can occur, or maximum in-cylinder pressure limits can be exceeded). The second stage of main fuel injection is timed to occur near top dead centre of the compression stroke. A portion of the main fuel introduced during the second stage also bums near TDC, contributing to the rate of heat release at crank angle degree C. The fuel injected during this stage, however, bums substantially in a diffusion combustion mode contributing to the portion of the curve between crank angle degrees C and D. Preferably, the injection of the main fuel during the second stage is complete before 30 crank angle degrees after TDC of the compression stroke to maintain high cycle efficiency.

With reference to Figure 6b, the ECU may also receive data from measurement subsystem 501 that indicates whether or not knocking is occurring. If knocking is detected, then the ECU takes appropriate control measures, as described by steps 503 through 506.

Therefore, the disclosed method of introducing main fuel in two separate stages reduces the likelihood of knocking, provides efficient operation by using stratified charge (pilot plume), lean burn and diffusion modes of combustion all in the same engine cycle, and maintains high engine output while reducing NOx emissions compared to conventional methods of operation.

As used herein, the term "throttle" or "throttle position" has been used in a general sense to convey the load request on the engine. Typically, such a load request is set by the user and may be a foot pedal placement (in the case of a vehicular engine) or a predetermined load request (in the case of an energy generating engine). In general, there are many ways in which a user may set the load request and the term "throttle" (as used in this application) should be understood in this general sense.

While the disclosure describes preferred embodiments of the method and apparatus with reference to a four-stroke engine, those skilled in the art will understand that the same methods may be applied to two-stroke engines. Similarly, while the accompanying figures do not illustrate engines equipped with a glow plug or spark plug to assist with ignition of the fuel, engines equipped with such devices and their respective configurations are well known to those skilled in the art.

As will be apparent to those skilled in the art in the light of the foregoing disclosure, many alterations and modifications are possible in the practice of this invention without departing from the spirit or scope thereof. Accordingly, the scope of the invention is to be construed in accordance with the substance defined by the following claims.

## Claims

1. A method of introducing gaseous fuel into a cylinder (110; 210; 310) of an operating internal combustion engine, said engine having a piston (113; 213; 313) disposed within said cylinder, said method comprising:
a. monitoring a set of engine parameters;
b. determining engine load and engine speed from said set of engine parameters;
c. in a first stage, introducing a first gaseous fuel (117a; 217a; 317a) into said cylinder where said first gaseous fuel forms a substantially homogeneous mixture prior to combustion, said homogeneous mixture comprising said first gaseous fuel and intake air; and
d. in a second stage, occurring sequentially after said first stage, introducing a second gaseous fuel (117b; 217b; 317b) into said cylinder, **characterised in that** combustion of said second gaseous fuel directly supplements energy used to drive said piston, to allow said engine to operate at higher load conditions beyond that available from combustion of said first gaseous fuel; and further **characterised in that** said first and second gaseous fuel quantity is controllable in response to at least one of engine load and engine speed and the quantity of said first gaseous fuel being limited to reduce the likelihood of knocking.

2. The method of claim 1 wherein said second stage is initiated when said piston is at or near top dead center.

3. The method of claim 2 wherein within the same engine cycle, said first gaseous fuel combusts according to a pre-mixed combustion mode and said second gaseous fuel combusts substantially according to a diffusion combustion mode.

4. The method of claim 3 wherein said pre-mixed combustion mode is a homogeneous charge compression ignition mode.

5. The method of claim 1 wherein said engine is a four-stroke engine.

6. The method of claim 1 wherein said first stage begins during the intake stroke.

7. The method of claim 1 wherein said first stage begins when said piston is at or near top dead center of the intake stroke.

8. The method of claim 1 wherein said first gaseous fuel is pre-mixed with intake air prior to being introduced into said cylinder.

9. The method of claim 8 wherein said first gaseous fuel is pre-mixed with intake air upstream from a turbocharger or a supercharger.

10. The method of claim 1 wherein said set of engine parameters comprises at least one of engine speed, engine throttle position, intake manifold temperature, intake manifold pressure, exhaust gas recirculation flow rate and temperature, air flow into said cylinder, compression ratio, intake and exhaust valve timing and the presence or absence of knocking within said cylinder.

11. The method of claim 10 further comprising changing at least one of second gaseous fuel quantity or second stage timing in response to changes in the value of at least one parameter of said set of engine parameters.

12. The method of claim 11 wherein an electronic control unit controls the timing and quantity of said second gaseous fuel.

13. The method of claim 1 wherein the quantity of said second gaseous fuel is variable and said quantity increases when said engine load increases.

14. The method of claim 13 further comprising turbocharging said engine and controlling intake manifold pressure at least in part by controlling at least one of: (a) the quantity of said second gaseous fuel and (b) the time said second gaseous fuel is introduced into said cylinder.

15. The method of claim 14 further comprising increasing intake manifold pressure to reduce intake charge equivalence ratio when knocking is detected.

16. The method of claim 13 further comprising at least one of turbocharging and recirculating engine exhaust gas to an intake manifold, and influencing intake manifold temperature by controlling at least one of (a) the quantity of said second gaseous fuel and (b) the time said second gaseous fuel is introduced into said cylinder.

17. The method of claim 16 further comprising reducing intake manifold temperature when knocking is detected.

18. The method of claim 13 wherein said second stage comprises a plurality of fuel injection pulses.

19. The method of claim 18 wherein said second stage consists of a first injection pulse and a second injection pulse and said second gaseous fuel is apportioned between said first and second injection pulses.

20. The method of claim 18 wherein the total quantity of said second gaseous fuel is determined in response to engine load requirements with an electronic control unit referring to a look-up table to apportion said second gaseous fuel between said plurality of fuel injection pulses, wherein said electronic control unit accounts for the fuel conversion efficiency that corresponds to the timing of said plurality of injection pulses.

21. The method of claim 19 wherein timing of at least one of said first and second injection pulses is controlled in response to at least one of engine load and speed.

22. The method of claim 19 wherein a first portion quantity of said second gaseous fuel is introduced through said first injection pulse and a second portion quantity of said second gaseous fuel is introduced through said second injection pulse, and said first portion quantity and said second portion quantity are independently controlled in response to at least one of engine load and engine speed.

23. The method of claim 22 wherein said first portion quantity is increased in response to an increase in engine load.

24. The method of claim 22 wherein at least one of second injection pulse timing and said second portion quantity is controlled to influence at least one of intake manifold temperature and intake manifold pressure, whereby timing is advanced to reduce intake manifold temperature and/or pressure, and/or fuel quantity is reduced to reduce intake manifold temperature and/or pressure.

25. The method of claim 24 further comprising reducing intake manifold temperature when knocking is detected.

26. The method of claim 24 further comprising increasing intake manifold pressure when knocking is detected.

27. The method of claim 1 further comprising introducing a pilot fuel into the cylinder so that it ignites when said piston is at or near top dead centre of the compression stroke.

28. The method of claim 27 further comprising timing the introduction and amount of said pilot fuel to form a substantially lean stratified charge prior to the ignition of said pilot fuel.

29. The method of claim 28 wherein said pilot fuel is introduced into said cylinder when said piston is between 120 and 20 crank angle degrees before top dead center.

30. The method of claim 27 further comprising electronically controlling the timing and amount of gaseous fuel and pilot fuel introduced into said cylinder.

31. The method of claim 30 further comprising changing at least one of pilot fuel quantity and timing when knocking is detected.

32. The method of claim 27 wherein said pilot fuel is selected from the group consisting of diesel fuel and dimethylether.

33. The method of claim 27 wherein said pilot fuel is mixed with one of said first or second gaseous fuels and introduced into said cylinder together with the gaseous fuel.

34. The method of claim 1 wherein said first and second gaseous fuels are the same gaseous fuel.

35. The method of claim 1 wherein said first gaseous fuel and said second gaseous fuel are selected from the group consisting of natural gas, liquefied petroleum gas, bio-gas, landfill gas, and hydrogen gas.

36. The method of claim 1 further comprising igniting said gaseous fuel using a glow plug or spark plug.

37. An apparatus for introducing gaseous fuel into the cylinder (110; 210; 310) of an internal combustion engine operating in accordance with the method of any one of claims 1-36, said engine having at least one cylinder with a piston (113; 213; 313) disposed therein, said apparatus comprising:
a. measuring devices (401) for collecting operational data from said engine, said measuring devices comprising a tachometer for measuring engine speed, a sensor for determining throttle position, and a sensor for determining temperature within an air intake manifold;
b. an electronic control unit (ECU) that receives said operational data and processes said data to compute a set of load conditions, said electronic control unit comprising memory for storing control sets of load conditions and predetermined operating modes for said control sets of load conditions, said electronic control unit matching said computed set of load conditions with said control sets of load conditions to select one of a plurality of predetermined operating modes;
c. means for controlling temperature within said intake manifold, whereby said means is employed to conform temperature within said intake air manifold with a temperature determined by said electronic control unit with reference to said measured operational data and said computed set of load conditions;
d. a gaseous fuel injection valve (115; 215; 315;) controlled by said electronic control unit to introduce a portion of said gaseous fuel into said cylinder at times when cylinder intake (111; 211; 311) and exhaust valves (112; 212; 312) are closed, and in quantities determined by said electronic control unit in accordance with said predetermined operating modes; and,
e. an auxiliary gaseous fuel injection valve (325) controlled by said electronic control unit to introduce a portion of said gaseous fuel into an intake air passage (320) to provide a mixture of air and gaseous fuel to said cylinder when said intake valve is open, with said mixture having a fuel to air ratio determined by said electronic control unit based upon said predetermined operating modes;
wherein for given computed load conditions said predetermined operating mode determines timing and quantity of gaseous fuel introduction into said cylinder, whereby a premixed charge of gaseous fuel and air is introduced through said intake valve to combust within said cylinder in a premixed combustion mode, and gaseous fuel is introduced through said gaseous fuel injection valve into said cylinder to combust in substantially a diffusion combustion mode wherein combustion of said second gaseous fuel directly supplements energy used to drive said piston to meet load demands beyond that provided by combustion of said premixed charge gaseous fuel alone and the quantity of said first gaseous fuel is limited to reduce the likelihood of knocking.

38. The apparatus of claim 37 wherein said means for controlling temperature within said intake air manifold comprises a fluid passage connecting an exhaust manifold to said intake air manifold and a control valve for controlling the quantity of exhaust gas flowing through said fluid passage.

39. The apparatus of claim 38 further comprising a heat exchanger associated with said fluid passage to control the temperature of said exhaust gas flowing therethrough.

40. The apparatus of claim 37 further comprising a turbocharger to pressurize said intake air and at least one of an intercooler and an aftercooler.

## Patentansprüche

1. Verfahren zum Einführen von gasförmigem Brennstoff in einen Zylinder (110: 210: 310) eines laufenden Verbrennungskraftmotors, wobei der Motor einen Kolben (113: 213; 313) aufweist, der im Zylinder angeordnet ist, und wobei das Verfahren Folgendes umfasst:
(a) Anzeigen eines Motorparametersatzes:
(b) Festlegen von Motorlast und Motordrehzahl des Motorparametersatzes:
(c) in einem ersten Schritt. Einführen eines ersten gasförmigen Brennstoffes (117a; 217a; 317a) in den Zylinder, wobei der erste gasförmige Brennstoff ein im Wesentlichen homogenes Gemisch vor der Verbrennung bildet, wobei das homogene Gemisch den ersten gasförmigen Brennstoff und Ansaugluft umfasst: und
(d) in einem zweiten Schritt, der auf den ersten Schritt folgt. Einführen eines zweiten gasförmigen Brennstoffes (117b; 217b; 317b) in den Zylinder, **dadurch gekennzeichnet, dass** die Verbrennung des zweiten gasförmigen Brennstoffes direkt Energie ergänzt, die eingesetzt wird, um den Kolben anzutreiben, um es dem Motor zu erlauben, unter höheren Lastbedingungen zu laufen, die über diejenigen hinaus gehen, die von der Verbrennung des ersten gasförmigen Brennstoffes verfügbar sind: und ferner **dadurch gekennzeichnet, dass** die erste und die zweite gasförmige Brennstoffmenge steuerbar ist als Antwort auf zumindest eines von Motorlast und Motordrehzahl, und dass die Menge des ersten gasförmigen Brennstoffes begrenzt ist, um die Wahrscheinlichkeit des Klopfens zu reduzieren.

2. Verfahren nach Anspruch 1, wobei der zweite Schritt initiiert ist, wenn der Kolben am oder dicht beim oberen Totpunkt ist.

3. Verfahren nach Anspruch 2, wobei im selben Motorzyklus, der erste gasförmige Brennstoff gemäß einer vorgemischten Verbrennungsart brennt und der zweite gasförmige Brennstoff im Wesentlichen gemäß einer Diffusionsverbrennungsart brennt.

4. Verfahren nach Anspruch 3, wobei die vorgemischte Verbrennungsart eine homogene kompressionsgezündete Verbrennungsart ist.

5. Verfahren nach Anspruch 1, wobei der Motor ein Viertaktmotor ist.

6. Verfahren nach Anspruch 1, wobei der erste Schritt während des Ansaugtakts startet.

7. Verfahren nach Anspruch 1, wobei der erste Schritt startet, wenn der Kolben am oder dicht beim oberen Totpunkt des Ansaugtakts ist.

8. Verfahren nach Anspruch 1, wobei der erste gasförmige Brennstoff mit Ansaugluft vorgemischt ist, bevor er in den Zylinder eingeführt wird.

9. Verfahren nach Anspruch 8, wobei der erste gasförmige Brennstoff vor einem Turbolader oder einem Auflader mit Ansaugluft vorgemischt ist.

10. Verfahren nach Anspruch 1, wobei der Motorparametersatz zumindest einen von Folgenden umfasst: Motordrehzahl, Motordrosselklappenposition. Ansaugkrümmertemperatur. Ansaugkrümmerdruck. Abgasrückführungsmenge und -temperatur, Luftdurchsatz in den Zylinder, Kompressionsverhältnis. Ansaug- und Abgasveritileinstellung und die Anwesenheit oder Abwesenheit von Klopfen im Zylinder.

11. Verfahren nach Anspruch 10, das ferner das Ändern von zumindest einem der zweiten gasförmigen Brennstoffmenge oder der zweiten Schritteinstellung umfasst, und dies in Antwort auf Änderungen des Werts von zumindest einem Parameter des Motorparametersatzes.

12. Verfahren nach Anspruch 11, wobei ein elektronisches Steuergerät die Einstellung und die Menge des zweiten gasförmigen Brennstoffes steuert.

13. Verfahren nach Anspruch 1, wobei die Menge des zweiten gasförmigen Brennstoffes variabel ist und wobei die Menge zunimmt, wenn die Motorlast zunimmt.

14. Verfahren nach Anspruch 13, das ferner das Turboladen des Motors und das Steuern des Ansaugkrümmerdrucks umfasst, und dies zumindest teilweise, indem es zumindest eines von Folgendem steuert: (a) die Menge des zweiten gasförmigen Brennstoffes und (b) die Zeit des zweiten gasförmigen Brennstoffes, das in den Zylinder eingeführt ist.

15. Verfahren nach Anspruch 14, das ferner das Erhöhen des Ansaugkrümmerdrucks umfasst, um das Ansauglast-Äquivalenzverhältnis zu reduzieren, wenn Klopfen erkannt ist.

16. Verfahren nach Anspruch 13. das ferner zumindest eines vom Turboladen und Rückführen von Motorabgas zu einem Ansaugkrümmer umfasst. und das auf die Ansaugkrümmertemperatur einwirkt, indem es zumindest eines von Folgendem steuert: (a) die Menge des zweiten gasförmigen Brennstoffes und (b) die Zeit des zweiten gasförmigen Brennstoffes, das in den Zylinder eingeführt ist.

17. Verfahren nach Anspruch 16, das ferner das Herabsetzen der Ansaugkrümmertemperatur umfasst, wenn Klopfen erkannt ist.

18. Verfahren nach Anspruch 13, wobei der zweite Schritt mehrere Kraftstoffeinspritzimpulse umfasst.

19. Verfahren nach Anspruch 18. wobei der zweite Schritt aus einem ersten Einspritzimpuls und einem zweiten Einspritzimpuls besteht und wobei der zweite gasförmige Brennstoff zwischen dem ersten und dem zweiten Einspritzimpuls verteilt wird.

20. Verfahren nach Anspruch 18. wobei die Gesamtmenge des zweiten gasförmigen Brennstoffes in Antwort auf Motorlastvoraussetzungen mit einem elektronischen Steuergerät unter Bezugnahme auf eine Nachschlagetabelle festgelegt ist, um den zweiten gasförmigen Brennstoff zwischen den mehreren Kraftstoffeinspritzimpulsen zu verteilen, wobei das elektronische Steuergerät für den Kraftstoffumwandlungswirkungsgrad zählt, der der Einstellung von den mehreren Einspritzimpulsen entspricht.

21. Verfahren nach Anspruch 19, wobei die Einstellung von zumindest einem des ersten und des zweiten Einspritzimpulses in Antwort auf zumindest eines von Motorlast und Motordrehzahl gesteuert ist.

22. Verfahren nach Anspruch 19, wobei eine erste Anteilsmenge des zweiten gasförmigen Brennstoffes durch den ersten Einspritzimpuls eingeführt ist und eine zweite Anteilsmenge des zweiten gasförmigen Brennstoffes durch den zweiten Einspritzimpuls eingeführt ist, und wobei die erste Anteilsmenge und die zweite Anteilsmenge unabhängig in Antwort auf zumindest eines von Motorlast und Motordrehzahl gesteuert ist.

23. Verfahren nach Anspruch 22, wobei die erste Anteilsmenge in Antwort auf eine Zunahme der Motorlast erhöht ist.

24. Verfahren nach Anspruch 22, wobei zumindest eine von der zweiten Einspritzimpulseinstellung und der zweiten Anteilsmenge gesteuert ist, um auf zumindest eines von Ansaugkrümmertemperatur und Ansaugkrümmerdruck einzuwirken, wobei die Einstellung vorgeschoben ist, um die Ansaugkrümmertemperatur und/oder den Druck zu verringern, und/oder die Kraftstoffmenge ist verringert, um die Ansaugkrümmertemperatur und/oder den Druck zu verringern.

25. Verfahren nach Anspruch 24, das ferner das Verringern der Ansaugkrümmertemperatur umfasst, wenn Klopfen erkannt ist.

26. Verfahren nach Anspruch 24, das ferner das Erhöhen des Ansaugkrümmerdrucks umfasst, wenn Klopfen erkannt ist.

27. Verfahren nach Anspruch 1, das ferner das Einführen eines Zündkraftstoffes in den Zylinder umfasst, so dass es entflammt, wenn der Kolben am oder dicht beim oberen Totpunkt des Kompressionstaktes ist.

28. Verfahren nach Anspruch 27, das ferner das Einstellen der Einführung und der Menge des Zündkraftstoffes umfasst, um eine im Wesentlichen magere Schichtladung vor der Zündung des Zündkraftstoffes zu bilden.

29. Verfahren nach Anspruch 28, wobei der Zündkraftstoff in den Zylinder eingeführt wird, wenn der Kolben zwischen 120 und 20 Kurbelwinkelgrad vor dem oberen Totpunkt ist.

30. Verfahren nach Anspruch 27, das ferner das elektronische Steuern der Einstellung und des Betrags von gasförmigem Brennstoff und Zündkraftstoff steuert, der in den Zylinder eingeführt ist.

31. Verfahren nach Anspruch 30, das ferner das Ändern von zumindest eines der Zündkraftstoffmenge und der Einstellung umfasst, wenn Klopfen erkannt ist.

32. Verfahren nach Anspruch 27, wobei der Zündkraftstoff aus der Gruppe ausgewählt wird, die aus Dieselkraftstoff und Dimethylether besteht.

33. Verfahren nach Anspruch 27, wobei der Zündkraftstoff mit einem von dem ersten oder dem zweiten gasförmigen Brennstoff gemischt ist und gemeinsam mit dem gasförmigen Brennstoff in den Zylinder eingeführt ist.

34. Verfahren nach Anspruch 1, wobei der erste und der zweite gasförmige Brennstoff derselbe gasförmige Brennstoff sind.

35. Verfahren nach Anspruch 1. wobei der erste gasförmige Brennstoff und der zweite gasförmige Brennstoff aus einer Gruppe ausgewählt werden, die aus Erdgas, flüssigem Propangas, Biogas, Deponiegas und Wasserstoffgas besteht.

36. Verfahren nach Anspruch 1, das ferner das Zünden des gasförmigen Brennstoffes mit dem Einsetzen einer Glühkerze oder Zündkerze umfasst.

37. Vorrichtung zum Einführen von gasförmigem Brennstoff in den Zylinder (110: 210: 310) eines Verbrennungskraftmotors, der im Einklang mit dem Verfahren nach einem der Ansprüche 1 bis 36 läuft, wobei der Motor zumindest einen Zylinder mit einem darin angeordneten Kolben (113; 213; 313) aufweist, wobei die Vorrichtung Folgendes umfasst:
(a) Messungseinheiten (401) zum Sammeln von Betriebsdaten des Motors, wobei die Messungseinheiten ein Tachometer zum Messen der Motordrehzahl, einen Sensor zum Festlegen der Drosselklappenposition, und einen Sensor zum Festlegen der Temperatur in einem Ansaugkrümmer umfassen:
(b) ein elektronisches Steuergerät (ECU), das die Betriebsdaten empfängt und die Daten verarbeitet, um einen Lastbedingungssatz zu berechnen, wobei das elektronische Steuergerät einen Speicher umfasst, um Lastbedingungs-Steuersätze und vorbestimmte Betriebsarten für die Lastbedingungs-Steuersätze zu speichern, wobei das elektronische Steuergerät den berechneten Lastbedingungssatz mit dem Lastbedingungs-Steuersatz vergleicht, um eine von den mehreren vorbestimmten Betriebsarten auszuwählen:
(c) Mittel zum Steuern der Temperatur im Ansaugkrümmer, wobei das Mittel eingesetzt wird, um die Temperatur im Ansaugkrümmer an eine Temperatur anzupassen, die durch das elektronische Steuergerät festleget ist unter Bezugnahme auf die gemessenen Betriebsdaten und den berechneten Lastbedingungssatz:
(d) ein Gasbrennstoff-Einspritzventil (115: 215: 315), das vom elektronischen Steuergerät gesteuert wird, um dann einen Ariteil vom gasförmigen Brennstoff in den Zylinder einzuführen, wenn Zylinderansaugventile (111; 211; 311) und Abgasventile (112; 212; 312) geschlossen sind, und in Mengen, die vom elektronischen Steuergerät im Einklang mit den vorbestimmten Betriebsarten festgelegt werden; und
(e) ein Hilfs-Gasbrennstoff-Einspritzventil (325), das vom elektronischen Steuergerät gesteuert wird, um einen Anteil vom gasförmigen Brennstoff in einen Ansaugluftdurchgang (320) einzuführen, um ein Gemisch aus Luft und gasförmigem Brennstoff zum Zylinder zu liefern, wenn das Ansaugventil offen ist, wobei das Gemisch ein Kraftstoff-Luft-Verhältnis aufweist, das von der elektronischen Steuergerät anhand der vorbestimmten Betriebsarten festgelegt wird:
wobei für gegebene berechnete Lastbedingungen die vorbestimmte Betriebsart die Einstellung und Menge der Einführung von gasförmigem Brennstoff in den Zylinder festlegt, wobei eine vorgemischte Last aus gasförmigem Brennstoff und Luft durch das Ansaugventil eingeführt wird, um im Zylinder in einer vorgemischten Verbrennungsart zu brennen, und wobei gasförmiger Brennstoff durch das Gasbrennstoff-Einspritzventil in den Zylinder eingeführt wird, um im Wesentlichen in einer Diffusionsverbrennungsart zu brennen, wobei die Verbrennung des zweiten gasförmigen Brennstoffes direkt Energie ergänzt, die eingesetzt wird, um den Kolben anzutreiben, um Lastanforderungen zu entsprechen, die über diejenigen hinaus gehen, die von der Verbrennung vom vorgemischten Ladungsgasbrennstoff allein bereit gestellt werden und wobei die Menge des ersten gasförmigen Brennstoffes begrenzt ist, um die Wahrscheinlichkeit des Klopfens zu reduzieren.

38. Vorrichtung nach Anspruch 37, wobei das Mittel zum Steuern von Temperatur im Ansaugkrümmer einen Fluiddurchgang, der einen Abgasrohrkrümmer mit dem Ansaugkrümmer verbindet, und ein Steuerventil zum Steuern der Menge vom Abgas, das durch den Fluiddurchgang fließt, umfasst.

39. Vorrichtung nach Anspruch 38, die ferner einen Wärmeaustauscher in Verbindung mit dem Fluiddurchgang umfasst, um die Temperatur des Abgases, das **dadurch** fließt, zu steuern.

40. Vorrichtung nach Anspruch 37, die ferner einen Turbolader umfasst, um die Ansaugluft unter Druck zu setzen, und zumindest einen von einem Zwischenkühler und einem Nachkühler.

## Revendications

1. Procédé d'introduction d'un carburant gazeux dans un cylindre (110 ; 210 ; 310) d'un moteur à combustion interne en fonctionnement, ledit moteur ayant un piston (113 ; 213 ; 313) disposé à l'intérieur dudit cylindre, ledit procédé comprenant les étapes consistant à :
a. surveiller un ensemble de paramètres du moteur ;
b. déterminer la charge du moteur et la vitesse du moteur à partir dudit ensemble de paramètres du moteur ;
c. dans une première étape, introduire un premier carburant gazeux (117a ; 217a ; 317a) dans ledit cylindre où ledit premier carburant gazeux forme un mélange sensiblement homogène avant la combustion, ledit mélange homogène comprenant ledit premier carburant gazeux et de l'air entrant ; et
d. dans une seconde étape, se produisant après ladite première étape, introduire un second carburant gazeux (117b ; 217b ; 317b) dans ledit cylindre, **caractérisé en ce que** la combustion dudit second carburant gazeux augmente directement l'énergie utilisée pour entraîner ledit piston, pour permettre audit moteur de fonctionner dans des conditions de charge supérieures à celles disponibles avec la combustion dudit premier carburant gazeux ; et
**caractérisé en outre en ce que** la quantité desdits premier et second carburants gazeux est peut être commandée en réponse à au moins l'un des éléments suivants : la charge du moteur et le régime du moteur, et la quantité dudit premier carburant gazeux étant limitée pour réduire la l'éventualité d'un cognement

2. Procédé selon la revendication 1, dans lequel ladite seconde étape débute lorsque ledit piston est au niveau de ou proche du point mort haut.

3. Procédé selon la revendication 2, dans lequel, dans le même cycle de moteur, ledit premier carburant gazeux brûle selon un mode de combustion pré-mélangé et ledit second combustible gazeux brûle sensiblement selon un mode de combustion par diffusion.

4. Procédé selon la revendication 3, dans lequel le mode de combustion pré-mélangé est un mode d'allumage par compression à charge homogène.

5. Procédé selon la revendication 1, dans lequel ledit moteur est un moteur à quatre temps.

6. Procédé selon la revendication 1, dans lequel ladite première étape commence au cours de la course d'admission.

7. Procédé selon la revendication 1, dans lequel ladite première étape commence lorsque ledit piston est au niveau de ou près du point mort haut de la course d'admission.

8. Procédé selon la revendication 1, dans lequel ledit premier carburant gazeux est pré-mélangé avec de l'air entrant avant d'être introduit dans ledit cylindre.

9. Procédé selon la revendication 8, dans lequel ledit premier carburant gazeux est pré-mélangé avec de l'air entrant en amont d'un turbocompresseur ou d'un compresseur volumétrique.

10. Procédé selon la revendication 1, dans lequel ledit ensemble de paramètres du moteur comprend au moins l'un des éléments suivants : le régime du moteur, la position du volet d'accélération du moteur, la température de la tubulure d'admission, la pression de la tubulure d'admission, le débit et la température de la recirculation des gaz d'échappement, le flux d' air dans ledit cylindre, le taux de compression, le calage de la soupape d'admission et d'échappement et la présence ou absence de cognement dans ledit cylindre.

11. Procédé selon la revendication 10, comprenant en outre le changement d'au moins l'un des éléments suivants : la quantité de second carburant gazeux ou le calage de la seconde étape en réponse aux changements de la valeur d'au moins un paramètre dudit ensemble de paramètres du moteur.

12. Procédé selon la revendication 11, dans lequel une unité de commande électronique commande le calage et la quantité dudit second carburant gazeux.

13. Procédé selon la revendication 1, dans lequel la quantité dudit second carburant gazeux est variable et ladite quantité augmente lorsque ladite charge du moteur augmente.

14. Procédé selon la revendication 13, comprenant en outre la turbocompression dudit moteur et la commande de la pression de la tubulure d'admission au moins en partie en commandant au moins l'un des éléments suivants : (a) la quantité dudit second carburant gazeux et (b) le moment où ledit second carburant gazeux est introduit dans ledit cylindre.

15. Procédé selon la revendication 14, comprenant en outre l'augmentation de la pression de la tubulure d'admission pour réduire le rapport d'équivalence de charge d'admission lorsqu'un cognement est détecté.

16. Procédé selon la revendication 13, comprenant en outre au moins l'un des éléments suivants : turbocompression et recirculation des gaz d'échappement du moteur dans une tubulure d'admission, et influence de la température de la tubulure d'admission en commandant au moins l'un des éléments suivants : (a) la quantité dudit second carburant gazeux et (b) le moment où ledit second carburant gazeux est introduit dans ledit cylindre.

17. Procédé selon la revendication 16, comprenant en outre la réduction de la température de la tubulure d'admission lorsqu'un cognement est détecté.

18. Procédé selon la revendication 13, dans lequel ladite seconde étape comprend une pluralité d'impulsions d'injection de carburant.

19. Procédé selon la revendication 18, dans lequel ladite seconde étape comporte une première impulsion d'injection et une seconde impulsion d'injection et ledit second carburant gazeux est réparti entre lesdites première et seconde impulsions d'injection.

20. Procédé selon la revendication 18, dans lequel la quantité totale dudit second carburant gazeux est déterminée en réponse aux exigences de charge du moteur avec une unité de commande électronique se référant à une table de conversion pour répartir ledit second carburant gazeux entre ladite pluralité d'impulsions d'injection de carburant, dans lequel ladite unité de commande électronique rend compte de l'efficacité de la conversion du carburant qui correspond au calage de ladite pluralité d'impulsions d'injection.

21. Procédé selon la revendication 19, dans lequel le calage d'au moins l'une desdites première et seconde impulsions d'injection est commandée en réponse à au moins l'un des éléments suivants : la charge et le régime du moteur.

22. Procédé selon la revendication 19, dans lequel une première quantité partielle dudit second carburant gazeux est introduite par l'intermédiaire de ladite première impulsion d'injection et une seconde quantité partielle dudit second carburant gazeux est introduite par l'intermédiaire de ladite seconde impulsion d'injection, et ladite première quantité partielle et ladite seconde quantité partielle sont commandées de manière indépendante en réponse à au moins l'un des éléments suivants : la charge du moteur et le régime du moteur.

23. Procédé selon la revendication 22, dans lequel ladite première quantité partielle augmente en réponse à une augmentation de la charge du moteur.

24. Procédé selon la revendication 22, dans lequel au moins l'un des éléments suivants : le calage de ladite seconde impulsion d'injection et ladite seconde quantité partielle est commandé pour influencer au moins l'un des éléments suivants : la température de la tubulure d'admission et la pression de la tubulure d'admission, grâce à quoi le calage est avancé pour réduire la température et/ou la pression de la tubulure d'admission, et/ou la quantité de carburant est réduite pour réduire la température et/ou la pression de la tubulure d'admission.

25. Procédé selon la revendication 24, comprenant en outre la réduction de la température de la tubulure d'admission lorsqu'un cognement est détecté.

26. Procédé selon la revendication 24, comprenant en outre l'augmentation de la pression de la tubulure d'admission lorsqu'un cognement est détecté.

27. Procédé selon la revendication 1, comprenant en outre l'introduction d'un carburant pilote dans le cylindre, de façon à ce qu'il s'allume lorsque ledit piston est au niveau de ou proche du point mort haut de la course de compression.

28. Procédé selon la revendication 27, comprenant en outre le calage de l'introduction et la quantité dudit carburant pilote pour former une charge stratifiée sensiblement pauvre avant l'allumage dudit carburant pilote.

29. Procédé selon la revendication 28, dans lequel ledit carburant pilote est introduit dans ledit cylindre lorsque ledit piston se trouve entre 120 et 20 degrés de la position du vilebrequin avant le point mort haut.

30. Procédé selon la revendication 27, comprenant en outre la commande électronique du calage et de la quantité de carburant gazeux et de carburant pilote introduits dans ledit cylindre.

31. Procédé selon la revendication 30, comprenant en outre le changement d'au moins l'un des éléments suivants : la quantité ou le calage de combustible pilote lorsque le cognement est détecté.

32. Procédé selon la revendication 27, dans lequel ledit carburant pilote est choisi dans le groupe consistant en le carburant diesel et le diméthyléther.

33. Procédé selon la revendication 27, dans lequel ledit carburant pilote est mélangé avec un desdits premier et second carburants gazeux et introduit dans ledit cylindre avec le carburant gazeux.

34. Procédé selon la revendication 1, dans lequel lesdits premier et second carburants gazeux sont le même carburant gazeux.

35. Procédé selon la revendication 1, dans lequel ledit premier carburant gazeux et ledit second carburant gazeux sont choisis dans le groupe consistant en le gaz naturel, le gaz de pétrole liquéfié, le biogaz, le gaz d'enfouissement et le gaz hydrogène.

36. Procédé selon la revendication 1, comprenant en outre l'allumage dudit combustible gazeux en utilisant une bougie de préchauffage ou une bougie d'allumage.

37. Appareil permettant d'introduire un carburant gazeux dans le cylindre (110 ; 210 ; 310) d'un moteur à combustion interne en fonctionnement selon le procédé de l'une quelconque des revendications 1 à 36, ledit moteur ayant au moins un cylindre avec un piston (113 ; 213 ; 313) disposé dans celui-ci, ledit appareil comprenant :
a. des dispositifs de mesure (401) permettant de collecter des données de fonctionnement dudit moteur, lesdits dispositifs de mesure comprenant un tachymètre permettant de mesurer la vitesse du moteur, un capteur permettant de déterminer la position du volet d'accélération du moteur, et un capteur permettant de déterminer la température dans le tubulure d'admission d'air ;
b. une unité de commande électronique (ECU) qui reçoit lesdites données de fonctionnement et traite lesdites données pour calculer un ensemble de conditions de charge, ladite unité de commande électronique comprenant une mémoire permettant de stocker les ensembles de commande des conditions de charge et les modes de fonctionnement prédéterminés pour lesdits ensembles de commande de conditions de charge, ladite unité de commande électronique faisant correspondre ledit ensemble calculé de conditions de charge avec lesdits ensembles de commande de conditions de charge pour choisir l'un d'une pluralité de modes de fonctionnement prédéterminés ;
c. un moyen de commande de la température dans ladite tubulure d'entrée, grâce à quoi ledit moyen est employé pour rendre la température dans ladite tubulure d'admission d'air conforme à une température déterminée par ladite unité de commande électronique en faisant référence auxdites données de fonctionnement mesurées et audit ensemble de conditions de charge calculé.
d. une soupape d'injection de carburant gazeux (115 ; 215 ; 315) commandée par ladite unité de commande électronique pour introduire une partie dudit carburant gazeux dans ledit cylindre aux moments où les soupapes d'admission (111 ; 211 ; 311) et d'échappement (112 ; 212 ; 312) du cylindre sont fermées, et en des quantités déterminées par ladite unité de commande électronique selon lesdits modes de fonctionnement prédéterminés ; et
e. une soupape d'injection de carburant gazeux auxiliaire (325) commandée par ladite unité de commande électronique pour introduire une partie dudit carburant gazeux dans un passage d'admission d'air (320) pour fournir un mélange d'air et de carburant gazeux audit cylindre lorsque ladite soupape d'injection est ouverte, ledit mélange ayant un rapport carburant sur air déterminé par ladite unité de commande électronique en se basant sur lesdits modes de fonctionnement prédéterminés ;
dans lequel, pour des conditions de charge calculées données, ledit mode de fonctionnement prédéterminé détermine le calage et la quantité de carburant gazeux à introduire dans ledit cylindre, grâce à quoi une charge pré-mélangée de carburant gazeux et d'air est introduite par l'intermédiaire de ladite soupape d'admission pour brûler dans ledit cylindre dans un mode de combustion pré-mélangé, et du carburant gazeux est introduit par l'intermédiaire de ladite soupape d'admission de carburant gazeux dans ledit cylindre pour brûler sensiblement dans un mode de combustion par diffusion dans lequel la carburant dudit second carburant gazeux augmente directement l'énergie utilisée pour entraîner ledit piston pour répondre aux demandes de charge au-delà de celles fournies par la combustion dudit combustible gazeux de charge pré-mélangé seul et la quantité dudit premier combustible gazeux est limitée pour réduire l'éventualité d'un cognement.

38. Appareil selon la revendication 37, dans lequel ledit moyen de commande de la température dans ladite tubulure d'admission d'air comprend un passage de fluide raccordant une tubulure d'échappement à ladite tubulure d'admission d'air et une soupape de commande permettant de commander la quantité de gaz d'échappement s'écoulant par ledit passage de fluide.

39. Appareil selon la revendication 38, comprenant en outre un échangeur thermique associé audit passage de fluide pour commander la température desdits gaz d'échappement s'écoulant par celui-ci.

40. Appareil selon la revendication 37, comprenant en outre un turbocompresseur pour mettre ladite admission d'air et au moins un refroidisseur intermédiaire ou un postrefroidisseur sous pression.
